# EUROPÄISCHE PATENTSCHRIFT

(11) **EP 3 562 743 B1**
(45) Veröffentlichungstag und Bekanntmachung des Hinweises auf die Patenterteilung: **17.06.2020**
(21) Anmeldenummer: 18700312.4
(22) Anmeldetag: 02.01.2018
(51) Int. Cl.: B64G 1/40, F17C 13/00, F02K 9/44, F02K 9/60, B64D 37/02

(54) **BEHÄLTER ZUM AUFNEHMEN, SPEICHERN UND ABGEBEN VON FLÜSSIGKEITEN UND/ODER VISKOSEN STOFFEN, INSBESONDERE VON KRAFTSTOFF ODER TREIBSTOFF ODER TRINKWASSER, VERFAHREN ZU DESSEN HERSTELLUNG UND DESSEN VERWENDUNG**
CONTAINER FOR RECEIVING, STORING, AND DISPENSING LIQUIDS AND/OR VISCOUS SUBSTANCES, IN PARTICULAR FUEL, PROPELLANT OR DRINKING WATER, METHOD FOR PRODUCING SAME, AND USE THEREOF
RÉCIPIENT DE RÉCEPTION, STOCKAGE ET DISTRIBUTION DE LIQUIDES ET/OU DE SUBSTANCES VISQUEUSES, EN PARTICULIER DE CARBURANT OU DE COMBUSTIBLE OU D'EAU POTABLE, PROCÉDÉ POUR SA FABRICATION ET L'UTILISATION DE CELUI-CI

(30) Priorität: 02.01.2017 DE 102017100034
(43) Veröffentlichungstag der Anmeldung: 06.11.2019
(73) Patentinhaber: MT Aerospace AG, 86153 Augsburg (DE)
(72) Erfinder: WEILAND, Stefan, 53498 Waldorf (DE)
(74) Vertreter: Grape & Schwarzensteiner
(86) Internationale Anmeldenummer: PCT/EP2018/050075
(87) Internationale Veröffentlichungsnummer: WO 2018/122413

(56) Entgegenhaltungen:
- JP-A- H0 656 097
- US-A- 3 923 188
- US-A- 4 901 762
- US-A1- 2014 283 936

## Beschreibung

Die vorliegende Erfindung betrifft einen Behälter zum Aufnehmen, Speichern und Abgeben von Flüssigkeiten und/oder viskosen Stoffen, insbesondere von Kraftstoff oder Treibstoff oder Trinkwasser, ein Verfahren zu dessen Herstellung und dessen Verwendung.

Für die Lageregelung von Raumfahrzeugen, wie beispielsweise Satelliten, werden (Klein-)Triebwerke eingesetzt, die mit Treibstoff versorgt werden müssen. Das wesentliche Problem der Versorgung mit Treibstoff besteht in der geringen Gravitation, in einem Mikrogravitationszustand und in der Schwerelosigkeit, welcher/welchem das Raumfahrzeug bzw. der Satellit auf seiner Umlaufbahn ausgesetzt ist. Aufgrund dessen verteilt sich der Treibstoff in dem Behälter oder weg von der Auslassöffnung relativ ungeordnet. Um den Treibstoff aus dem Behälter mittels Kapillareffektes zu fördern, werden Behälter mit sogenannten Leitblechen ausgerüstet. Beispielsweise ist in der EP 2 361 196 B1 ein derartiger Behälter als Tank für ein Raumfahrzeug beschrieben. Der Behälter ist zum Aufnehmen, Speichern und Abgeben von Flüssigkeiten und/oder viskosen Stoffen, insbesondere von Kraftstoff oder Treibstoff, vorgesehen. Der Behälter umfasst einen Mantel und wenigstens ein Leitblech zum Transport der Flüssigkeiten und/oder viskosen Stoffe. Das Leitblech, das dabei eine Länge bzw. Höhe von mehreren Millimetern bis zu einigen hundert Millimeter aufweist, ist in einem Innenraum des Behälters an der Innenseite des Mantels und mit einem Ende einer Auslassöffnung des Behälters zugewandt angeordnet, ragt mit dessen Länge bzw. Höhe vollständig in den Innenraum des Behälters und erstreckt sich in einen zu der Auslassöffnung des Behälters benachbarten oder angrenzenden Bereich hinein. Obwohl sich dieser Behälter aufgrund seiner konstruktiven Ausgestaltung in der Praxis zwischenzeitlich ausgesprochen bewährt und als besonders vorteilhaft herausgestellt hat, gestaltet sich eine nachträgliche Montage solcher Leitbleche in Form von gesonderten und einzeln hergestellten Bauteilen bzw. Bauteilkomponenten an der Innenseite des Behälters verhältnismäßig aufwendig. Darüber hinaus sind solche Leitbleche grundsätzlich nur für einen Transport der Flüssigkeiten und/oder viskosen Stoffen vorgesehen und geeignet. Das Speichern der Flüssigkeiten und/oder viskosen Stoffen erfolgt demgegenüber ausschließlich durch den Mantel des Behälters bzw. den Behälter selbst. Zudem kann der Transport der Flüssigkeiten und/oder viskosen Stoffe ausschließlich punktuell bzw. an lokaler Stelle, nämlich nur an Stellen, an welchen ein Leitblech eben zusätzlich vorgesehen ist, stattfinden. Der Mantel des Behälters bzw. der Behälter selbst und das darin zu montierende Leitblech sind darüber hinaus nicht miteinander integral hergestellt, geschweige denn miteinander integral ausgebildet. Um einen Behälter mit einem Leitblech zu verwirklichen, findet vielmehr eine aufeinanderfolgende Durchführung von verschiedenen, voneinander getrennten Herstellungsschritten statt. Das Leitblech wird erst nach dem Herstellen und vor dem Fügen der Dom- und zylinderförmigen Behälterabschnitte - also nachträglich - und damit aufwendig in diesen als gesonderte und einzeln hergestellte Bauteile bzw. Bauteilkomponenten montiert und an dem Mantel des Behälters mittels ebenfalls gesonderter Befestigungselemente mit diesem lösbar oder mittels Schweiß- oder Lötverfahren unlösbar befestigt. Nicht zuletzt aufgrund dessen besteht grundsätzlich auch ein nicht unerhebliches zusätzliches Risiko durch fehlerhafte Montage oder (nachträgliche) Beschädigung des Leitbleches, was sich wiederum sehr nachteilig auf einen gerichteten Flüssigkeitstransport auswirken kann. Die Funktionalität des Leitbleches wird eingeschränkt oder geht gänzlich verloren. Schließlich besteht aufgrund einer solchen nachträglichen Montage des Leitbleches ebenso ein ausgesprochen hohes Risiko für eine mögliche Beschädigung oder sogar Zerstörung des Behälters insgesamt, der zumeist nur eine Manteldicke von wenigen Millimetern aufweist. Weitere solcher Behälter sind aus den US 3 923 188 A, US 4 901 762 A und US 2014/283936 A1 bekannt.

Schließlich ist in der JP H06 56097 A ein Behälter zum Aufnehmen, Speichern und Abgeben von Flüssigkeiten und/oder viskosen Stoffen, insbesondere von Kraftstoff oder Treibstoff oder Trinkwasser, mit einem Mantel, an dem ein Sieb mit einer Oberflächenstruktur über dessen beiden oberen Enden befestigt ist, offenbart, umfassend eine Kapillarstruktur, die in einem Innenraum des Behälters an der Innenseite des Mantels angeordnet ist, sich unter anderem in einen zu der Auslassöffnung des Behälters benachbarten oder angrenzenden Bereich hineinerstreckt und zum Fördern der Flüssigkeit und/oder des viskosen Stoffes hin zu der Auslassöffnung des Behälters vorgesehen ist. Das Sieb ist - ähnlich zu den zuvor erwähnten Leitblechen - in einem Abstand zu dem Mantel in dem Innenraum des Behälters an der Innenseite des Mantels und mit einem Ende einer Auslassöffnung des Behälters zugewandt befestigt. Insoweit sind bei diesem Behälter dieselben Nachteile wie bei den Behältern mit den Leitblechen anzutreffen.

Der vorliegenden Erfindung liegt daher die Aufgabe zugrunde, einen Behälter zum Aufnehmen, Speichern und Abgeben von Flüssigkeiten und/oder viskosen Stoffen, insbesondere von Kraftstoff oder Treibstoff oder Trinkwasser, zur Verfügung zu stellen, mit welchem sich die obigen Nachteile verhindern lassen, welcher mithin konstruktiv besonders einfach ausgebildet ist, eine ausgesprochen zuverlässige Speicherung wie gleichermaßen kontinuierliche Förderung und Abgabe der in dem Behälter aufgenommenen und gespeicherten Flüssigkeiten und viskosen Stoffe, insbesondere des Kraftstoffes oder Treibstoffes oder Trinkwassers, sicherstellt und in der Herstellung ausgesprochen kostengünstig ist, ein Verfahren zu dessen Herstellung und dessen Verwendung bereitzustellen.

Diese Aufgabe wird in vorrichtungstechnischer Hinsicht auf überraschend einfache Weise durch die Merkmale des Anspruchs 1 gelöst.

Durch die Ausgestaltung des erfindungsgemäßen Behälters zum Aufnehmen, Speichern und Abgeben von Flüssigkeiten und/oder viskosen Stoffen, insbesondere von Kraftstoff oder Treibstoff oder Trinkwasser, mit einem Mantel mit einer zumindest teilweise an dem Mantel integral ausgebildeten, mikroskopischen Oberflächenstruktur, die Oberflächenstruktur umfassend wenigstens eine nut- und/oder rinnenförmig ausgebildete Kapillare, die in einem Innenraum des Behälters an der Innenseite des Mantels und mit einem Ende einer Auslassöffnung des Behälters zugewandt angeordnet ist, sich in einen zu der Auslassöffnung des Behälters benachbarten oder angrenzenden Bereich hineinerstreckt und durch zwei einander zugeordnete, zueinander verlaufende Seitenwände zum Fördern der Flüssigkeit und/oder des viskosen Stoffes innerhalb der Kapillare hin zu der Auslassöffnung des Behälters gebildet ist, wird eine besonders einfache Bauweise des Behälters erreicht. Darüber hinaus ist eine gleichzeitige Speicherung und ausgesprochen zuverlässige wie gleichermaßen kontinuierliche Förderung sowie Abgabe der in dem Behälter aufgenommenen Flüssigkeiten und viskosen Stoffe, insbesondere des Kraftstoffes oder Treibstoffes oder Trinkwassers, durch den Mantel des Behälters bzw. den Behälter bzw. die Behälterwand selbst sichergestellt. So wird insbesondere eine Treibstoffversorgung weder zeitweise noch vollständig unterbrochen. Eine Unterversorgung und Nicht-Versorgung der Triebwerke mit Treibstoff und letztendlich eine Unkontrollierbarkeit des Raumfahrzeuges bzw. Satelliten werden vermieden. Die mikroskopische Oberflächenstruktur und der Mantel des Behälters bzw. der Behälter bzw. die Behälterwand selbst sind miteinander integral ausgebildet. Die mikroskopische Oberflächenstruktur ist mit/an dem Mantel integral angeordnet bzw. an der Innenseite des Mantels - und damit als Teil des Mantels - an/in den Mantel an- und/oder eingeformt bzw. an- und/oder eingearbeitet. Neben einer Speicherung der Flüssigkeiten und viskosen Stoffe sind dem Mantel des Behälters bzw. dem Behälter bzw. der Behälterwand Funktion und Wirkung eines gerichteten Transportes der Flüssigkeiten und viskosen Stoffe gleichermaßen inhärent. Die mikroskopisch gestaltete Oberflächenstruktur wird als integraler Bestandteil des Herstellprozesses des Mantels des Behälters bzw. des Behälters bzw. der Behälterwand an sich realisiert. Eine Aneinanderreihung bzw. aufeinanderfolgende Durchführung von verschiedenen und voneinander gänzlich unabhängigen Herstellungsschritten - wie im Stand der Technik zur Montage des Leitbleches - findet nicht statt. Des Weiteren gestaltet sich die Herstellung des erfindungsgemäßen Behälters einfach und wenig arbeitsintensiv und ist somit ausgesprochen kostengünstig. So entfällt eine nachträgliche und verhältnismäßig aufwendige Montage des wenigstens einen gesonderten und einzeln hergestellten Leitbleches mittels weiteren gesonderten und einzeln hergestellten Befestigungselementen oder mittels Schweiß- oder Lötverfahren an der Innenseite des Mantels des Behälters. Eine Beschädigung oder sogar Zerstörung des Leitbleches und/oder des Behälters insgesamt ist/sind ebenfalls ausgeschlossen.

Im Ergebnis zeichnet sich der Behälter nach der Erfindung durch eine Vielzahl von Vorteilen aus. Aufgrund der erfindungsgemäßen Ausgestaltung und Anordnung einer mikroskopischen Oberflächenstruktur an der Innenseite des Mantels, ist es möglich, eine Flüssigkeit und/oder einen viskosen Stoff in einem Behälter zu speichern und gleichzeitig durch Ausnutzung von Kapillarkräften - unabhängig vom Vorhandensein von Schwerkraft oder anderen Energiepotentialen - von beliebiger Stelle in einem Behälter hin zu einem Reservoir an einer Auslassöffnung des Behälters anstelle von Leitblechen mittels wenigstens einer etwa nut- und/oder rinnenförmig ausgebildeten Kapillare zu transportieren. Damit lassen sich bei der Nutzung von Leitblechen einhergehende Schwierigkeiten sämtlich und ausgesprochen einfach ausschließen.

Weitere vorteilhafte Einzelheiten des erfindungsgemäßen Behälters sind in den Ansprüchen 2 bis 15 beschrieben.

Von großer Bedeutung für eine ausgesprochen einfache und damit kostengünstige Bauweise sind die Merkmale des Anspruchs 2. Danach ist die wenigstens eine etwa nut- und/oder rinnenförmig ausgebildete Kapillare an der Innenseite des Mantels länglich oder im Wesentlichen länglich ausgebildet und in einer mit der Längsachse des Behälters zusammenfallenden Ebene angeordnet. Die wenigstens eine etwa nut- und/oder rinnenförmig ausgebildete Kapillare verläuft mithin an der Innenseite des Mantels ähnlich eines Meridians oder Längenkreises.

Entsprechend den Maßnahmen des Anspruchs 3 erstreckt sich die wenigstens eine etwa nut- und/oder rinnenförmig ausgebildete Kapillare an der Innenseite des Mantels in ganz vorteilhafter Weise wenigstens teilweise oder vollständig über die gesamte Länge des Behälters. Insoweit ist es möglich, die Länge der wenigstens einen etwa nut- und/oder rinnenförmig ausgebildeten Kapillare individuell an die Form und/oder Größe bzw. Abmessungen des Behälters, die Materialeigenschaften von Behälter und darin aufzunehmenden, zu speichernden und abzugebenden Flüssigkeiten und/oder viskosen Stoffe, deren physikalischen Charakteristiken etc. anzupassen. So ist es durchaus möglich, die wenigstens eine etwa nut- und/oder rinnenförmig ausgebildete Kapillare nur über eine Teillänge des Behälters verlaufen zu lassen, beispielsweise etwa beginnend von der Auslassöffnung des Behälters über einen unteren Domabschnitt oder Dom bis in einen mittleren Behälterabschnitt oder bis etwa zu einem oberen Domabschnitt oder Dom des Behälters, oder dazwischen. In ersterem Fall wäre der obere Domabschnitt oder Dom und/oder ein sich an den oberen Domabschnitt oder Dom angrenzender bzw. anschließender Bereich des mittleren Behälterabschnittes des Behälters ohne Kapillare/n ausgestaltet. In letzterem Fall wären beginnend von der Auslassöffnung des Behälters der untere Domabschnitt, der mittlere Behälterabschnitt und der obere Domabschnitt des Behälters vollständig oder teilweise mit wenigstens einer Kapillare versehen. Ebenso wäre es möglich, den oberen Domabschnitt ganz ohne Kapillare/n auszugestalten.

Weiterhin liegt es im Rahmen der Erfindung, dass die Innenseite des Mantels des Behälters nach Anspruch 4 zwei oder mehrere etwa nut- und/oder rinnenförmig ausgebildete Kapillaren umfasst.

In diesem Zusammenhang können die zwei oder mehreren etwa nut- und/oder rinnenförmig ausgebildeten Kapillaren nach Anspruch 5 insbesondere einzeln und/oder zu mehreren zueinander gleichmäßig beabstandet sein. Vorzugsweise sind die etwa nut- und/oder rinnenförmig ausgebildeten Kapillaren an der Innenseite des Mantels einzeln und/oder zu mehreren über den Umfang mit einer beliebigen Teilung, zweckmäßigerweise von 180°, 120°, 90°, 60°, 30° 15°, 10° oder 5° etc., angeordnet.

Von besonders großem Interesse sind weiterhin die konstruktiven Maßnahmen des Anspruchs 6, wonach die Innenseite des Mantels des Behälters vollständig oder im Wesentlichen vollständig mit etwa nut- und/oder rinnenförmig ausgebildeten Kapillaren versehen ist, um eine Speicherung und einen Transport der Flüssigkeit und/oder des viskosen Stoffes aus diesem Bereich hin zu der Auslassöffnung des Behälters sicherzustellen oder zumindest zu unterstützen. Dabei ist von ganz besonderem Vorteil, dass die Oberfläche des Behälters global und gesamtflächig oder jedenfalls großflächig an der/über die Behälterwand strukturiert ist. Ein Transport von Flüssigkeiten und/oder viskosen Stoffen kann mithin nicht - wie im Stand der Technik - nur lokal, sondern gesamt- oder großflächig an/über die Oberfläche des Behälters bzw. an der Innenseite des Mantels des Behälters erfolgen.

Bevorzugt weist die wenigstens eine etwa nut- und/oder rinnenförmig ausgebildete Kapillare nach Anspruch 7 einen Querschnitt, der keilförmig, halb- und teilkreisförmig, ellipsenförmig, elliptisch, oval, dreieckig, viereckig, quadratisch oder rechteckig, vieleckig, trapezförmig, parallelogrammförmig oder polygonförmig und/oder als Kombination daraus ausgebildet ist, auf.

Nach Anspruch 8 ist dem Behälter eine Einrichtung zum Gasbedrücken des Innenraumes des Behälters zugeordnet ist, durch welche die Flüssigkeit und/oder der viskose Stoff aus dem Behälter hin zu dem Triebwerk bzw. der Brennkammer förderbar ist.

Zweckmäßigerweise ist der Behälter in diesem Zusammenhang nach Anspruch 9 mit einer der Auslassöffnung des Behälters abgewandt angeordneten und mit der Einrichtung zum Gasbedrücken kommunizierenden Einlassöffnung versehen.

Des Weiteren ist erfindungsgemäß vorgesehen, dass der Behälter nach Anspruch 10 mit einer im Bereich der Auslassöffnung angeordneten und der Auslassöffnung vorgeordneten Einrichtung zum Sammeln und dosierten Abgeben der Flüssigkeiten und viskosen Stoffe, insbesondere des Kraftstoffes oder Treibstoffes oder Trinkwassers, oder dergleichen Propellant Management Device (PMD) versehen ist.

Darüber hinaus liegt es im Rahmen der Erfindung, dass der Behälter entsprechend den Merkmalen des Anspruchs 11 leichtbauend ausgebildet ist.

In vorteilhafter Weise ist der Behälter, insbesondere der Mantel des Behälters, nach Anspruch 12 aus Metall, insbesondere aus Stahl, Edelstahl, Aluminium, Titan, einer Legierung daraus und/oder einer Kombination daraus gebildet. Materialien, wie vorzugsweise Edelstahl oder insbesondere Titan oder eine Legierung daraus, werden einerseits der Forderung nach Minimierung des Gewichtes des Behälters und andererseits der Forderung nach zum Beispiel Säure- und Korrosionsbeständigkeit gegenüber Kraft- und Treibstoff oder Trinkwassertauglichkeit gleichermaßen gerecht.

In diesem Zusammenhang ist es von besonderem Vorteil, den Behälter, insbesondere den Mantel des Behälters, entsprechend den Merkmalen des Anspruchs 13 mit einem Überzug aus Kunststoff, insbesondere faserverstärktem Kunststoff, und/oder Faserverbundwerkstoff zu versehen. Hierdurch lassen sich die Steifigkeit und Festigkeit des Behälters nach der Erfindung erhöhen.

Alternativ dazu kann der Behälter, insbesondere der Mantel des Behälters, entsprechend den Maßnahmen des Anspruchs 14 in bevorzugter Weise vollständig oder auch nur teilweise aus Kunststoff, insbesondere faserverstärktem Kunststoff, und/oder Faserverbundwerkstoff gebildet sein.

Für einen Behälter nach der Erfindung bieten sich beispielsweise hinsichtlich einer Gewichtsoptimierung Faserverbundwerkstoffe an, die nach sämtlichen gängigen Fertigungsverfahren, wie Handlaminat, Prepreg, Harz-Infusion, Harz-Injektion inklusive geklebter bzw. gebolzter Fügungen etc., verarbeitet werden können. Demzufolge ist der Behälter, insbesondere der Mantel des Behälters, nach Anspruch 15 bevorzugt aus thermoplastischem Faserverbundmaterial gebildet, welches insbesondere aus mit einem thermoplastischen Matrixmaterial aus Polyamid (PA), Polybutylenterephtalat (PBT), Polyetherketon (PEEK), Polyethersulfon (PES), Polypropylen (PP), Polyphenylensulfid (PPS) oder Polysulfon (PSU), und/oder einer Kombination daraus, ohne oder mit vorimprägnierten Fasern, vorzugsweise Aluminiumoxid-, Aluminiumnitrid-, Aramid-, Basalt-, Bornitrid-, Glas-, Graphit-, Kohlenstoff-, Nylon-, Polyethylen-, Polyester-, Siliciumcarbid-, Siliciumnitrid- und/oder Keramikfasern und/oder einer Kombination daraus, besteht.

Diese Aufgabe wird in verfahrenstechnischer Hinsicht auf überraschend einfache Weise durch die Merkmale der Ansprüche 16 und 17 gelöst.

Durch die Ausgestaltung des erfindungsgemäßen Verfahrens nach Anspruch 16 zum Herstellen eines Behälters zum Aufnehmen, Speichern und Abgeben von Flüssigkeiten und/oder viskosen Stoffen, insbesondere von Kraftstoff oder Treibstoff oder Trinkwasser, mit einem Mantel und wenigstens einer mit dem Mantel integral ausgebildeten, etwa nut- und/oder rinnenförmig ausgebildeten Kapillare, umfassend folgende Schritte:
a) Bereitstellen von plattenförmigen Halbzeugen,
b) plastisches Umformen der plattenförmigen Halbzeuge zum Herstellen von einzelnen Komponenten des Mantels des Behälters,
c) Einbringen und/oder Aufbringen einer mikroskopischen Oberflächenstruktur in/auf mindestens eine der einzelnen Komponenten des Mantels des Behälters mit der wenigstens einen etwa nut- und/oder rinnenförmig ausgebildeten Kapillare durch ein abtragendes oder spanendes Verfahren, insbesondere durch Mikrofräsen, und/oder durch ein prägendes Verfahren und/oder durch ein additives Verfahren, insbesondere mittels Direkten Metall-Laser-Sinterns (DMLS), Selektiven Laserschmelzens (SLM), Selektiven Lasersinterns (SLS), Additive Layer Manufacturing (ALM), Elektronenstrahlschmelzens (Electron Beam Melting (EBW), und
d) Fügen der einzelnen Komponenten des Mantels zu einem Behälter,
hat sich in der Praxis neben den bereits im Zusammenhang mit dem Behälter nach der Erfindung beschriebenen vielen Vorteilen, welche das erfindungsgemäße Verfahren allesamt gleichermaßen aufweist und weiterbildet, die extrem einfache und kostengünstige Herstellung des erfindungsgemäßen Behälters insgesamt als besonders vorteilhaft erwiesen. Die Realisierung der mikroskopisch gestalteten Oberflächenstruktur ist ein integraler Bestandteil des Herstellprozesses des Mantels des Behälters bzw. des Behälters bzw. der Behälterwand an sich und wird nicht - wie im Stand der Technik - durch nachgeschaltete Integration von zunächst einzeln hergestellten Komponenten erreicht. Damit einhergehend sind dem erfindungsgemäßen Mantel des Behälters bzw. Behälter bzw. der Behälterwand neben einer Speicherung der Flüssigkeiten und viskosen Stoffe Funktion und Wirkung eines gerichteten Transportes der Flüssigkeiten und viskosen Stoffe inhärent.

Die Ausgestaltung des erfindungsgemäßen Verfahrens nach Anspruch 17 zum Herstellen eines Behälters zum Aufnehmen, Speichern und Abgeben von Flüssigkeiten und/oder viskosen Stoffen, insbesondere von Kraftstoff oder Treibstoff oder Trinkwasser, mit einem Mantel und wenigstens einer mit dem Mantel integral ausgebildeten, etwa nut- und/oder rinnenförmig ausgebildeten Kapillare, umfassend folgenden Schritt:
Fertigen des Mantels des Behälters und Einbringen und/oder Aufbringen einer mikroskopischen Oberflächenstruktur in/auf den Mantel des Behälters mit der wenigstens einen etwa nut- und/oder rinnenförmig ausgebildeten Kapillare durch ein generatives Verfahren, insbesondere mittels 3D-Druckens, Direkten Metall-Laser-Sinterns (DMLS), Selektiven Laserschmelzens (SLM), Selektiven Lasersinterns (SLS), Additive Layer Manufacturing (ALM), Elektronenstrahlschmelzens (Electron Beam Melting (EBW),
hat den zusätzlichen Vorteil, dass der Mantel des Behälters in einem einzigen Schritt gefertigt wird. Vor allem aber zeichnen sich generative Fertigungsverfahren für die vorliegende Anwendung ganz besonders aus, da die mikroskopische Oberflächenstruktur auf diese Weise keine Unterbrechungen, wie zum Beispiel Schweißnähte, aufweist, welche den Transport bzw. die Förderung der Flüssigkeiten und/oder viskosen Stoffe bzw. des Trinkwassers erschweren und sogar vollständig verhindern.

Schließlich liegt es noch im Rahmen der Erfindung, den erfindungsgemäßen Behälter zum Aufnehmen, Speichern und Abgeben von Flüssigkeiten und/oder viskosen Stoffen, insbesondere von Kraftstoff oder Treibstoff oder Trinkwasser, nach Anspruch 18 in Fahrzeugen, insbesondere in Luftfahrzeugen oder Fluggeräten der Luft- und Raumfahrt, vorzugsweise in Flugzeugen und Raumflugkörpern, zu verwenden.

Ganz besonders eignet sich der erfindungsgemäße Behälter nach Anspruch 19 zum Aufnehmen, Speichern und Abgeben von Flüssigkeiten und/oder viskosen Stoffen, insbesondere von kryogenen Fluiden, vorzugsweise von Sauerstoff und Wasserstoff, und von gasförmigen, flüssigen und festen Medien, vorzugsweise von Treib- oder Kraftstoffen, wie Hydrazin, Monomethylhydrazin (MMH), unsymmetrischen Dimethlyhydrazin (UDMH) oder Kerosin, Oxidationsmitteln (Oxidatoren), wie Stickstofftetroxiden oder Distickstofftetroxiden (NTO), oder Treibstoff/Oxidator-Gemischen und/oder (Trink-)Wasser und Abwasser, für Tanks und Treibstofftanks von Fluggeräten der Luft- und Raumfahrt, vorzugsweise von Raketen und/oder Satelliten.

Weitere Merkmale, Vorteile und Einzelheiten der Erfindung ergeben sich aus der nachfolgenden Beschreibung von einigen bevorzugten Ausführungsformen der Erfindung sowie anhand der Zeichnungen. Hierbei zeigen:
- Fig. 1: eine schematische, teilweise abgebrochene Querschnittansicht durch eine Ausführungsform eines erfindungsgemäß ausgebildeten Behälters mit einem Mantel mit einer zumindest teilweise integral ausgebildeten mikroskopischen Oberflächenstruktur,
- Fig. 2A: eine schematische, teilweise abgebrochene Querschnittansicht durch eine Ausführungsform des erfindungsgemäß ausgebildeten Behälters entsprechend der Linie II-II in der Fig. 1, in vergrößerter Darstellung,
- Fig. 2B: eine schematische, teilweise abgebrochene Querschnittansicht durch eine weitere Ausführungsform des erfindungsgemäß ausgebildeten Behälters entsprechend der Fig. 2A,
- Fig. 2C: eine schematische, teilweise abgebrochene Querschnittansicht durch eine noch weitere Ausführungsform des erfindungsgemäß ausgebildeten Behälters entsprechend der Fig. 2A,
- Fig. 3: eine schematische Querschnittansicht durch die Ausführungsform des erfindungsgemäß ausgebildeten Behälters entsprechend der Fig. 1, in verkleinerter Darstellung,
- Fig. 4: eine schematische Querschnittansicht durch eine andere Ausführungsform eines erfindungsgemäß ausgebildeten Behälters entsprechend der Fig. 3,
- Fig. 5: eine schematische Längsschnittansicht durch eine Ausführungsform eines erfindungsgemäß ausgebildeten Behälters, in verkleinerter Darstellung, und
- Fig. 6 bis 8: schematische Längsschnittansichten durch verschiedene andere Ausführungsformen eines erfindungsgemäß ausgebildeten Behälters entsprechend der Fig. 5.

Bei der nachfolgenden Beschreibung von Ausführungsformen eines erfindungsgemäßen Behälters 10 zum Aufnehmen, Speichern und Abgeben von Flüssigkeiten und/oder viskosen Stoffen, insbesondere von Kraftstoff oder Treibstoff oder Trinkwasser, sind einander entsprechende, gleiche Bauteile jeweils mit identischen Bezugsziffern versehen.

Der erfindungsgemäße Behälter 10 zum Aufnehmen, Speichern und Abgeben von Flüssigkeiten und/oder viskosen Stoffen, insbesondere von Kraftstoff oder Treibstoff und Trinkwasser, findet in vorteilhafter Weise in Fahrzeugen, insbesondere in Luftfahrzeugen oder Fluggeräten der Luft- und Raumfahrt, vorzugsweise in Flugzeugen und Raumflugkörpern, Verwendung.

Darüber hinaus lässt sich der erfindungsgemäße Behälter 10 zum Aufnehmen, Speichern und Abgeben von Flüssigkeiten und/oder viskosen Stoffen, insbesondere von kryogenen Fluiden, vorzugsweise von Sauerstoff und Wasserstoff, und von gasförmigen, flüssigen und festen Medien, vorzugsweise von Treib- oder Kraftstoffen, wie Hydrazin, Monomethylhydrazin (MMH), unsymmetrischen Dimethlyhydrazin (UDMH) oder Kerosin, Oxidationsmitteln (Oxidatoren), wie Stickstofftetroxiden oder Distickstofftetroxiden (NTO), oder Treibstoff/Oxidator-Gemischen und/ oder (Trink-)Wasser und Abwasser, für Tanks und Treibstofftanks von Fluggeräten der Luft- und Raumfahrt, vorzugsweise von Raketen und/oder Satelliten, einsetzen. Beispielsweise eignet sich der erfindungsgemäße Behälter 10 zur Verwendung als Raketen-Treibstofftank oder Satellitentank bzw. Treibstofftank zur Versorgung von (Klein-)Triebwerken eines Satelliten unter geringer Gravitation, in einem Mikrogravitationszustand und unter Schwerelosigkeit zu dessen Lageregelung auf der Umlaufbahn um die Erde etc.

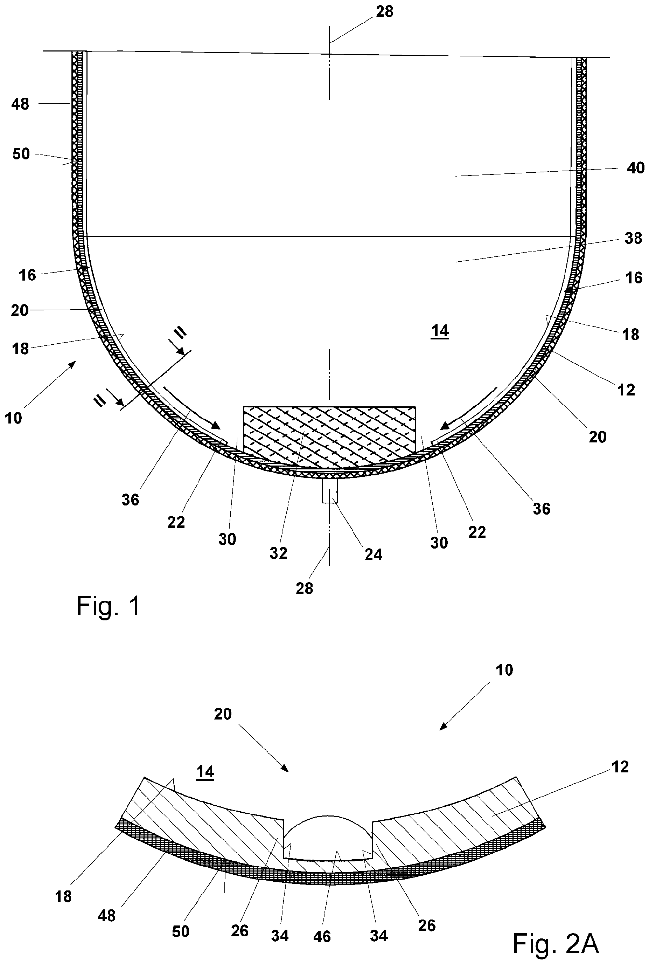

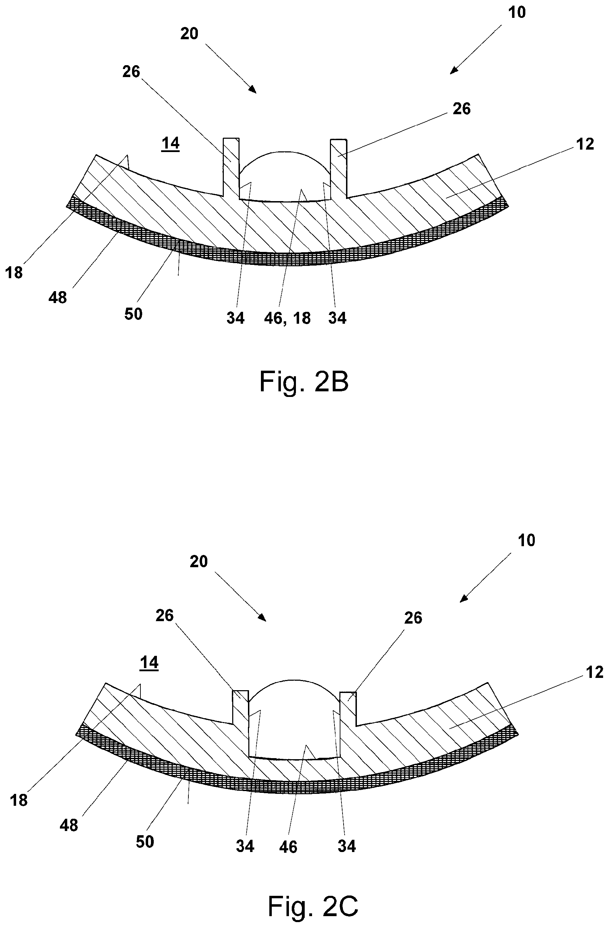

Der in den Fig. 1 und 2 schematisch dargestellte Behälter 10 nach der Erfindung umfasst einen, insbesondere dünnwandigen, Mantel 12, in dessen Innenraum 14 zum Beispiel kryogene Fluide, wie Sauerstoff und Wasserstoff oder auch MonomethylHydrazin sowie verschiedene Mixturen aus Nitrogen-Oxiden, aufgenommen und gespeichert sind, welche unter anderem als Treibstoff für einen Raketen- oder Satellitenantrieb bzw. sonstige Antriebsaggregate etwa zu deren Lageregelung dienen.

Der Mantel 12 ist, wie in den Fig. 1 und 2A bis 2C lediglich schematisch und, hierauf ist ausdrücklich hinzuweisen, nicht maßstabsgetreu dargestellt ist, wenigstens teilweise mit einer mikroskopischen Oberflächenstruktur 16 versehen.

Unter der bereits vorstehend wie nachfolgend verwendeten Formulierung "mikroskopische Oberflächenstruktur" ist/soll eine Oberflächenstruktur mit einer Längen-, Größen- bzw. Abmessungsordnung in einem Bereich von ungefähr ≤ (kleiner/gleich) 1 Millimeter zu verstehen/verstanden werden.

Die mikroskopische Oberflächenstruktur 16 ist dabei mit/an dem Mantel 12 integral ausgebildet bzw. angeordnet. Mit anderen Worten ist die mikroskopische Oberflächenstruktur 16 mit dem Mantel 12 einstückig ausgebildet. Mit noch anderen Worten ist die mikroskopische Oberflächenstruktur 16 an der Innenseite 18 des Mantels 12 - als Teil des Mantels 12 - an/in den Mantel 12 an- und/oder eingeformt bzw. an- und/oder eingearbeitet.

Darüber hinaus weist der Behälter 10 wenigstens eine etwa nut- und/oder rinnenförmig ausgebildete Kapillare 20 auf. Die wenigstens eine nut- und/oder rinnenförmig ausgebildete Kapillare 20 ist in der bzw. durch die mikroskopische/n Oberflächenstruktur 16 (aus-)gebildet, mithin quasi Teil der mikroskopischen Oberflächenstruktur 16.

Die wenigstens eine nut- und/oder rinnenförmig ausgebildete Kapillare 20 ist bei der in den Fig. 1 und 2A bis 2C gezeigten Ausführungsform des erfindungsgemäßen Behälters 10 in dessen Innenraum 14 an der Innenseite 18 des Mantels 12 angeordnet. Des Weiteren ist die wenigstens eine nut- und/oder rinnenförmig ausgebildete Kapillare 20 mit einem Ende 22 einer Auslassöffnung 24 des Behälters 10 zugewandt angeordnet.

Bei der beispielhaften Ausführungsform der Fig. 2A ist die wenigstens eine nut- und/oder rinnenförmig ausgebildete Kapillare 20 durch eine etwa nutförmige Ausnehmung oder Vertiefung bzw. Nut in dem Mantel 12 des Behälters 10 gebildet. Die etwa nutförmige Ausnehmung oder Vertiefung bzw. Nut ist dem Innenraum 14 des Behälters 12 quasi zugewandt und durch zwei Seitenwände 26 und eine Nutgrundfläche gebildet.

Bei der beispielhaften Ausführungsform der Fig. 2B ist die wenigstens eine nut- und/oder rinnenförmig ausgebildete Kapillare 20 durch zwei Seitenwände 26 zu einer etwa rinnen- bzw. rillenförmigen Ausgestaltung oder dergleichen Rinne bzw. Rille gebildet. Die zwei Seitenwände 26 sind einander zugeordnet und ragen über die Innenseite 18 des Mantels 12 hinaus sowie in den Innenraum 14 des Behälters 10 hinein.

Bei der beispielhaften Ausführungsform der Fig. 2C ist die wenigstens eine nut- und/oder rinnenförmig ausgebildete Kapillare 20 durch eine Kombination der beiden beispielhaften Ausführungsformen der Fig. 2A und 2B gebildet. Demnach ist die wenigstens eine nut- und/oder rinnenförmig ausgebildete Kapillare 20 einerseits durch eine etwa nutförmige Ausnehmung oder Vertiefung bzw. Nut in dem Mantel 12 des Behälters 10 entsprechend der Fig. 2A (teilweise) und andererseits durch zwei Seitenwände 26 zu einer etwa rinnen- bzw. rillenförmigen Ausgestaltung oder dergleichen Rinne bzw. Rille entsprechend der Fig. 2B (teilweise) gebildet.

Bei der Ausführungsform des erfindungsgemäßen Behälters 10, die in den Fig. 1 und 2A bis 2C gezeigt ist, ist die wenigstens eine etwa nut- und/oder rinnenförmig ausgebildete Kapillare 20 an der Innenseite 18 des Mantels 12 länglich oder im Wesentlichen länglich ausgebildet und in einer mit der Längsachse 28 des Behälters 10 zusammenfallenden Ebene angeordnet. Die wenigstens eine etwa nut- und/oder rinnenförmig ausgebildete Kapillare 20 verläuft mithin an der Innenseite 18 des Mantels 12 ähnlich einem Meridian oder Längenkreis, ist mithin geradlinig ausgebildet.

Wie aus der Fig. 1 hervorgeht, erstreckt sich die wenigstens eine nut- und/oder rinnenförmig ausgebildete Kapillare 20 weiterhin mit dem einen Ende 22 in einen Bereich 30 hinein, der zu der Auslassöffnung 24 des Behälters 10 benachbart ist und/oder an diesen (vorzugsweise unmittelbar) angrenzt.

Weiterhin ist entsprechend der Fig. 1 eine Einrichtung 32 bzw. ein wiederbefüllbares Reservoir oder dergleichen Behälter zum Sammeln und dosierten Abgeben der Flüssigkeiten und viskosen Stoffe oder des Trinkwassers, insbesondere des Kraftstoffes oder Treibstoffes oder Trinkwassers, in dem Bereich 30 der Auslassöffnung 24 angeordnet. Eine solche Einrichtung 32 ist auf dem einschlägigen Fachgebiet auch als sogenannte Propellant Management Device (PMD) bekannt.

Der Bereich 30 und damit die Einrichtung 32 sind der Auslassöffnung 24 dabei (unmittelbar) vorgeordnet. Die Einrichtung 32 kann auf diese Weise den Treibstoff sammeln, fördern und der Auslassöffnung 24 dosiert bzw. kontrolliert und zuleiten. Die Einrichtung 32 besitzt beispielsweise ein Speichervolumen von zum Beispiel ca. 4 Liter und kann mittels erfindungsgemäßer Ausbildung in ca. 1,5 Stunden gefüllt werden. Durch weitere konstruktive Maßnahmen, wie Siebe, Bleche etc., kann zusätzlich das Entstehen von Luftblasen verhindert werden. Der Treibstoff gelangt mithin luftblasenfrei aus dem Bereich 30 der Auslassöffnung 24, über die Einrichtung 32 und die Auslassöffnung 24 in die Triebwerke.

Durch die konstruktive Ausgestaltung des erfindungsgemäßen Behälters 10 werden die ungeordnet im Innenraum 14 verteilten Flüssigkeiten und viskosen Stoffe, insbesondere der Kraftstoff oder Treibstoff oder das Trinkwasser, über die wenigstens eine nut- und/oder rinnenförmig ausgebildete Kapillare 20 gesammelt bzw. an der Kapillare 20 mittels Kapillareffektes, der im Zusammenhang mit der Oberflächenspannung der Flüssigkeiten und viskosen Stoffe entsteht, angelagert. Die Anlagerung erfolgt, wie in den Fig. 2A bis 2C gezeigt, an einander gegenüberliegenden und zugewandten Seitenflächen 34 der zwei Seitenwände 26 der Kapillare 20. Die gesammelten bzw. angelagerten Flüssigkeiten und viskosen Stoffe fließen sodann entlang den Seitenflächen 34 der Kapillare 20 in Richtung des Pfeiles 36 zu deren Ende 22 zu dem bzw. in den Bereich 30. Der Bereich 30 entspricht somit einem Bereich, in welchem sich die Flüssigkeiten und viskosen Stoffe ansammeln, bevor diese über die Einrichtung 32 und die Auslassöffnung 24 an die Triebwerke weiterbefördert werden.

Der Behälter 10 kann in Abhängigkeit von dessen Form und Größe mit einer beliebigen Anzahl solcher Kapillaren 20 ausgestattet sein. Bei der Ausführungsform des erfindungsgemäßen Behälters 10 der Fig. 1 sind beispielhaft lediglich zwei solcher Kapillaren 20 gezeigt.

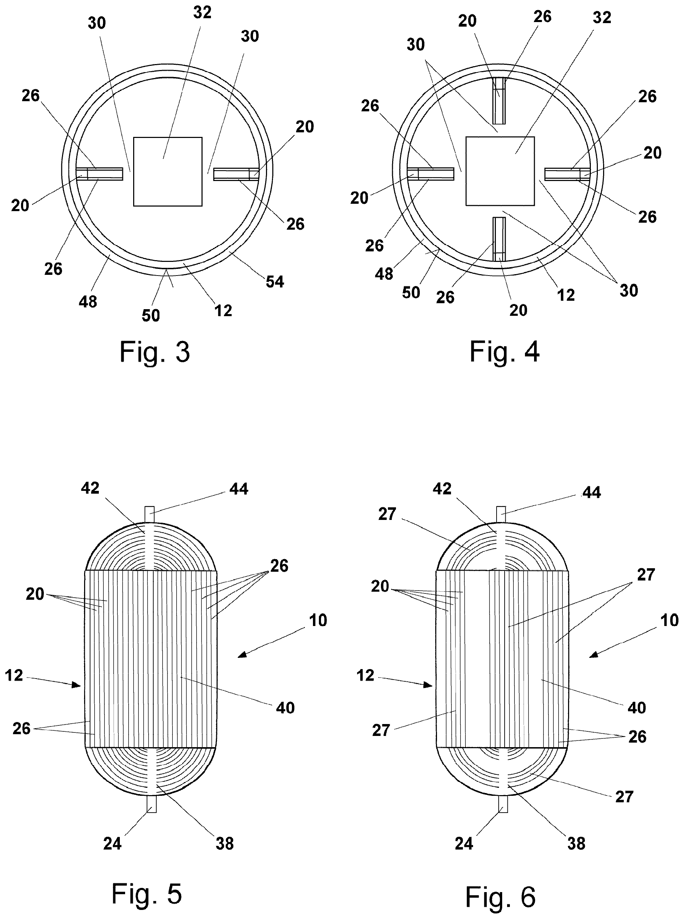

Die zwei Kapillaren 20 sind dabei in bevorzugter Weise zueinander gleichmäßig beabstandet. Bei der Ausführungsform des erfindungsgemäßen Behälters 10 gemäß den Fig. 1 und 3 sind die zwei Kapillaren 20 daher an der Innenseite 18 des Mantels 12 über den Umfang mit einer Teilung von etwa 180° angeordnet.

Beispielhaft ist in der Fig. 4 eine Ausführungsform eines erfindungsgemäßen Behälters 10 mit vier Kapillaren 20 dargestellt, die über den Umfang der Innenseite 18 mit einer Teilung von ca. 90° angeordnet sind.

Ohne im Einzelnen dargestellt zu sein, können die zwei oder mehreren etwa nut- und/oder rinnenförmig ausgebildeten Kapillaren 20 an der Innenseite 18 des Mantels 12 des Behälters 10 einzeln und/oder zu mehreren, d.h. im Verbund, zueinander nicht nur gleichmäßig, sondern auch ungleichmäßig beabstandet sein.

Ebenso ist es möglich, mehr als zwei Kapillare 20 an der Innenseite 18 des Mantels 12 vorzusehen, die dann entweder in beliebiger Zuordnung zueinander und/oder in regelmäßiger und/oder in unregelmäßiger Verteilung über den Umfang der Innenseite 18 des Mantels 12 angeordnet sind. In alternativer oder kumulativer Ausgestaltung können die mehr als zwei Kapillare 20 an der Innenseite 18 des Mantels 12 vorzugsweise auch über den Umfang mit einer beliebigen Teilung, bevorzugt von 120°, 90°, 60°, 30°, 15°, 10° oder 5° etc. oder einer sonstigen, sich gegebenenfalls nach der Anzahl der Kapillaren 20 bestimmenden Teilung, angeordnet sein/werden.

Für eine ganz besonders vorteilhafte, umfassende und damit wirksame Förderung von Flüssigkeit und/oder viskosem Stoff bzw. Trinkwasser liegt es weiterhin im Rahmen der Erfindung, die Innenseite 18 des Mantels 12 des Behälters 10 - über den Umfang gesehen - vollständig oder im Wesentlichen vollständig mit etwa nut- und/oder rinnenförmig ausgebildeten Kapillaren 20 zu versehen.

Bei einer solchen Ausführung, die zum Beispiel in der Fig. 5 gezeigt ist, sind die nut- und/oder rinnenförmig ausgebildeten Kapillaren 20, insbesondere eng bzw. dicht, nebeneinander angeordnet und überziehen die Innenseite 18 des Mantels 12 ganzflächig, jedenfalls im Wesentlichen ganzflächig, über den Umfang der Innenseite 18 des Mantels 12.

Alternativ zu einer vollständigen oder im Wesentlichen vollständigen Konturierung der Innenseite 18 des Mantels 12 besteht darüber hinaus ohne weiteres auch die Möglichkeit, entsprechend der Fig. 6 mehrere etwa nut- und/oder rinnenförmig ausgebildete Kapillaren 20 - als bzw. im Verbund - zusammenzufassen, nebeneinander anzuordnen und zum Beispiel in Streifensegmenten 27 über den Umfang der Innenseite 18 des Mantels 12 zu verteilen.

Die mit den etwa nut- und/oder rinnenförmig ausgebildeten Kapillaren 20 derart gebildeten Streifensegmente 27 können dann ihrerseits wiederum gleichmäßig oder ungleichmäßig zueinander und/oder über den Umfang der Innenseite 18 des Mantels 12 angeordnet sein/werden.

Bei den Ausführungsformen der Fig. 5 und 6, d.h. wenn die Innenseite 18 des Mantels 12 vollständig bzw. im Wesentlichen vollständig oder in Form von Streifensegmenten 27 mit den etwa nut- und/oder rinnenförmig ausgebildeten Kapillaren 20 versehen ist, kann es von Vorteil sein, lediglich eine Anzahl n-1 von Seitenwänden 26 vorzusehen.

Alternativ oder kumulativ dazu ist es möglich, die wenigstens eine etwa nut- und/oder rinnenförmig ausgebildete Kapillare 20 an der Innenseite 18 des Mantels 10 wenigstens teilweise oder vollständig über die gesamte Länge des Behälters 10 auszubilden.

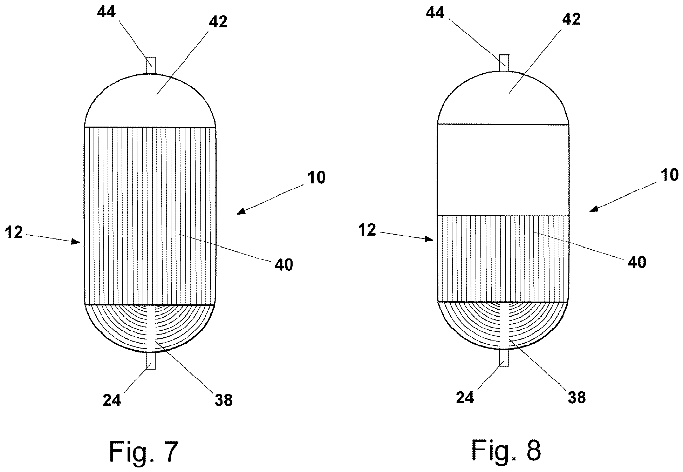

Weitere Ausführungsbeispiele eines erfindungsgemäß ausgebildeten Behälters 10 sind in den Fig. 7 und 8 schematisch vorgestellt. Insoweit kann die Länge der wenigstens einen etwa nut- und/oder rinnenförmig ausgebildeten Kapillare 20 bzw. der Vielzahl von etwa nut- und/oder rinnenförmig ausgebildeten Kapillaren 20 variieren und individuell an zum Beispiel die Form und/oder Größe bzw. Abmessungen des Behälters 10, dessen Materialeigenschaften und darin aufzunehmenden, zu speichernden und abzugebenden Flüssigkeiten und/oder viskosen Stoffe, deren physikalischen Charakteristiken oder der erforderlichen Leistung zum Transport bzw. zur Förderung von Flüssigkeit und/oder viskosem Stoff bzw. Trinkwasser etc. angepasst werden.

Bei den Ausführungsformen des Behälters 10 der Fig. 7 und 8 ist jeweils eine Vielzahl von separaten, etwa nut- und/oder rinnenförmig ausgebildeten Kapillaren 20 vorgeschlagen, die länglich oder im Wesentlichen länglich ausgebildet sind. Die Kapillaren 20 sind zudem in einer mit der Längsachse 28 des Behälters 10 zusammenfallenden Ebene sowie an der Innenseite 18 des Mantels 12 über den Umfang angeordnet. In beiden Ausführungsbeispielen erstrecken sich die Kapillaren 20 nur über eine Teillänge des Behälters 10.

Entsprechend der Fig. 7 verlaufen die Kapillaren 20 etwa beginnend von der Auslassöffnung 24 des Behälters 10 über einen unteren Domabschnitt 38 oder Dom und einen mittleren (zylinderförmigen) Behälterabschnitt 40 hin zu einem oberen Domabschnitt 42 oder Dom des Behälters 10. Der obere Domabschnitt 42 weist somit keine Kapillaren 20 auf.

Entsprechend der Fig. 8 verlaufen die Kapillaren 20 ebenfalls etwa beginnend von der Auslassöffnung 24 des Behälters 10 über den unteren Domabschnitt 38 oder Dom und einen Teil des Behälterabschnittes 40, nämlich ungefähr über die untere Hälfte des Behälterabschnittes 40 des Behälters 10. Die obere Hälfte des Behälterabschnittes 40 und der obere Domabschnitt 42 sind folglich ohne Kapillaren 20 ausgestattet.

Ohne im Einzelnen dargestellt zu sein, sind beliebige andere Ausgestaltungen des erfindungsgemäßen Behälters 10 denkbar, sofern sich nur eine ausreichende Leistung zum Transport bzw. zur Förderung von Flüssigkeit und/oder viskosem Stoff bzw. Trinkwasser erhalten lässt. Zum Beispiel können die Kapillaren 20 ausschließlich im Bereich des unteren Domabschnittes 38 oder vollständig über die gesamte Länge des Behälters 10 vorgesehen sein. In letzterem Fall verlaufen die Kapillaren 20 etwa beginnend von der Auslassöffnung 24 des Behälters 10 über den unteren Domabschnitt 38, den gesamten Behälterabschnitt 40 und den oberen Domabschnitt 42 hin bis zu einer Einlassöffnung 44 des Behälters 10.

Auch kann/können die Kapillare/n 20 einen beliebigen Querschnitt, der keilförmig, halb- und teilkreisförmig, ellipsenförmig, elliptisch, oval, dreieckig, viereckig, quadratisch oder rechteckig, vieleckig, trapezförmig, parallelogrammförmig oder polygonförmig und/oder als Kombination daraus ausgebildet ist, aufweisen.

Bei der Ausführungsform des Behälters 10 sind, wie aus den Fig. 2A bis 2C ersichtlich ist, die zwei Seitenwände 26 der etwa nut- und/oder rinnenförmigen Kapillare 20 parallel zueinander und zu der Längsachse 28 des Behälters 10 angeordnet sind. Die Seitenwände 26 und deren Seitenflächen 34 sind ebenflächig und münden in eine teilkreisförmige Nutgrundfläche 46 (Fig. 2A und 2C) bzw. einen Teil der Innenseite 18 des Mantels 12 des Behälters 10 (Fig. 2B) ein.

Schließlich ist dem Behälter 10 noch eine Einrichtung zum Gasbedrücken des Innenraumes 14 des Behälters 10 zugeordnet (nicht dargestellt). Durch die Gasbedrückungseinrichtung ist die Flüssigkeit und/oder der viskose Stoff bzw. das Trinkwasser aus dem Behälter 10 hin zu dem Triebwerk bzw. der Brennkammer (ebenfalls nicht dargestellt) förderbar.

Die Einlassöffnung 44 des Behälters 10 ist der Auslassöffnung 24 abgewandt bzw. dieser diametral gegenüberliegend angeordnet. Die Einlassöffnung 44 befindet sich in aller Regel im Bereich des Pols des oberen Domabschnittes 42 und kommuniziert mit der Gasbedrückungseinrichtung.

Der Behälter 10, der in den Fig. 1 bis 8 dargestellt ist, ist leichtbauend ausgebildet. Der Behälter 10 und insbesondere dessen Mantel 12 ist zu diesem Zweck aus Metall, insbesondere aus Stahl, Edelstahl, Aluminium, Titan, einer Legierung daraus und/oder einer Kombination daraus gebildet und zur Druckversteifung vorzugsweise mit einem Überzug 48 aus Kunststoff, insbesondere faserverstärktem Kunststoff, und/oder Faserverbundwerkstoff versehen. Der Überzug 48 ist bei der dargestellten Ausführungsform des erfindungsgemäßen Behälters 10 auf der Außenseite 50 des Mantels 12 aufgebracht.

Alternativ dazu können der Behälter 10 und insbesondere dessen Mantel 12 auch ohne Überzug 48 oder ebenso vollständig aus Kunststoff, insbesondere faserverstärktem Kunststoff, und/oder Faserverbundwerkstoff gebildet sein.

Bevorzugt ist der Behälter 10, insbesondere der Mantel 12 des Behälters 10, aus thermoplastischem Faserverbundmaterial gebildet. Das Faserverbundmaterial besteht dabei insbesondere aus mit einem thermoplastischen Matrixmaterial aus Polyamid (PA), Polybutylenterephtalat (PBT), Polyetherketon (PEEK), Polyethersulfon (PES), Polypropylen (PP), Polyphenylensulfid (PPS) oder Polysulfon (PSU), und/oder einer Kombination daraus, ohne oder mit vorimprägnierten Fasern, vorzugsweise Aluminiumoxid-, Aluminiumnitrid-, Aramid-, Basalt-, Bornitrid-, Glas-, Graphit-, Kohlenstoff-, Nylon-, Polyethylen-, Polyester-, Siliciumcarbid-, Siliciumnitrid- und/oder Keramikfasern und/oder einer Kombination daraus.

Die Anzahl, die Anordnung der etwa nut- und/oder rinnenförmig ausgebildeten Kapillare/n 20 zueinander und/oder über den Umfang der Innenseite 18 des Mantels 12, die Form, Größe und Länge der etwa nut- und/oder rinnenförmig ausgebildeten Kapillare/n 20, die Auswahl des Materials des Mantels 12 usw. bestimmen sich nach der Form und Größe des Behälters 10, der vorzusehenden Leistung zum Transport bzw. zur Förderung von Flüssigkeit und/oder viskosem Stoff bzw. Trinkwasser, deren Materialeigenschaften, allein und in Kombination zueinander, den jeweils unterschiedlichen Fluid-physikalischen Eigenschaften, wie Oberflächenspannung, Kontaktwinkel, etc. und sind folglich jeweils individuell auf den entsprechenden Einsatz und die damit vorgegebenen Randbedingungen abzustimmen bzw. an diese anzupassen.

Die Herstellung der in den Fig. 1 bis 8 dargestellten Ausführungsformen des erfindungsgemäßen Behälters 10 wird nachfolgend näher erläutert:
Zunächst werden gemäß Schritt a) plattenförmige Halbzeuge bereitgestellt.

Anschließend werden die plattenförmigen Halbzeuge in Schritt b) zum Herstellen von einzelnen Komponenten 38, 40, 42 bzw. Behälterabschnitten des Mantels 12 des Behälters 10, insbesondere einen unteren Domabschnitt 38 und einen oberen Domabschnitt 42 oder Dome sowie einen mittleren Behälterabschnitt 40 zwischen den beiden Domabschnitten 38, 42, für den Behälter 10, plastisch umgeformt.

In Schritt c) wird eine mikroskopische Oberflächenstruktur 16 in/auf mindestens eine der einzelnen Komponenten 38, 40, 42 des Mantels 12 des Behälters 10 mit der wenigstens einen etwa nut- und/oder rinnenförmig ausgebildeten Kapillare 20 durch ein abtragendes oder spanendes Verfahren, insbesondere durch Mikrofräsen, und/oder durch ein prägendes Verfahren und/oder durch ein additives Verfahren, insbesondere mittels Direkten Metall-Laser-Sinterns (DMLS), Selektiven Laserschmelzens (SLM), Selektiven Lasersinterns (SLS), Additive Layer Manufacturing (ALM), Elektronenstrahlschmelzens (Electron Beam Melting (EBW) eingebracht und/oder aufgebracht.

Schließlich werden die jeweils einander benachbart zugewandten Komponenten 38, 40 und 40, 42 bzw. Behälterabschnitte des Mantels 12 in Schritt e) miteinander zu einem Behälter 10 gefügt.

In alternativer Ausgestaltung kann die Herstellung der in den Fig. 1 bis 8 dargestellten Ausführungsformen des erfindungsgemäßen Behälters 10 auch einzig durch nachfolgend näher erläuterten Schritt erfolgen:
Demnach werden der Mantel 12 des Behälters 10 und die mikroskopische Oberflächenstruktur 16 in/auf dem Mantel 12 des Behälters 10 mit der wenigstens einen etwa nut- und/oder rinnenförmig ausgebildeten Kapillare 20 durch ein generatives Verfahren, insbesondere mittels 3D-Druckens, Direkten Metall-Laser-Sinterns (DMLS), Selektiven Laserschmelzens (SLM), Selektiven Lasersinterns (SLS), Additive Layer Manufacturing (ALM), Elektronenstrahlschmelzens (Electron Beam Melting (EBW) gebildet bzw. ein- und/oder aufgebracht.

Die vorliegende Erfindung ist nicht auf die dargestellten Ausführungsformen des Behälters 10 beschränkt. Ohne im Einzelnen dargestellt zu sein, ist es möglich, die Ausführungsformen des erfindungsgemäßen Behälters 10 und dessen einzelnen Bauteile untereinander bzw. miteinander individuell und beliebig zu kombinieren. So ist es ohne weiteres denkbar, die vorgestellten, zum Teil voneinander sehr unterschiedlichen Ausführungsformen des erfindungsgemäßen Behälters 10, insbesondere die mikroskopische Oberflächenstruktur 16 an der Innenseite 18 des Mantels 12 und damit zusammenhängend die wenigstens eine etwa nut- und/oder rinnenförmige Kapillare 20 sowie deren Ausbildung und Anordnung, beliebig auszugestalten. Darüber hinaus ist es möglich, die Kapillare/n 20, in beliebiger Anzahl, Anordnung, Form und Abmessung vorzusehen, um eine möglichst vollständige und damit rückstandslose Abgabe der in dem Behälter 10 aufgenommenen, gespeicherten und abzugebenden Flüssigkeiten und/oder viskosen Stoffen, insbesondere den Kraftstoff oder Treibstoff oder Trinkwasser, an die Auslassöffnung 24 bzw. die im Bereich 30 der Auslassöffnung 24 angeordneten und der Auslassöffnung 24 vorgeordneten Einrichtung 32 zum Sammeln und dosierten Abgeben der Flüssigkeiten und/oder viskosen Stoffe oder dergleichen Propellant Management Device (PMD) zu ermöglichen.

## Patentansprüche

1. Behälter zum Aufnehmen, Speichern und Abgeben von Flüssigkeiten und/oder viskosen Stoffen, insbesondere von Kraftstoff oder Treibstoff oder Trinkwasser, mit einem Mantel (12) mit einer zumindest teilweise an dem Mantel (12) integral ausgebildeten, mikroskopischen Oberflächenstruktur (16), die Oberflächenstruktur umfassend wenigstens eine nut- und/oder rinnenförmig ausgebildete Kapillare (20), die in einem Innenraum (14) des Behälters (10) an der Innenseite (18) des Mantels (12) und mit einem Ende (22) einer Auslassöffnung (24) des Behälters (10) zugewandt angeordnet ist, sich in einen zu der Auslassöffnung (24) des Behälters (10) benachbarten oder angrenzenden Bereich (24) hineinerstreckt und durch zwei einander zugeordnete, zueinander verlaufende Seitenwände (26) zum Fördern der Flüssigkeit und/oder des viskosen Stoffes innerhalb der Kapillare (20) hin zu der Auslassöffnung (24) des Behälters (10) gebildet ist.

2. Behälter nach Anspruch 1, **dadurch gekennzeichnet, dass** die wenigstens eine etwa nut- und/oder rinnenförmig ausgebildete Kapillare (20) an der Innenseite (18) des Mantels (12) länglich oder im Wesentlichen länglich ausgebildet und in einer mit der Längsachse (28) des Behälters (10) zusammenfallenden Ebene angeordnet ist.

3. Behälter nach Anspruch 1 oder 2, **dadurch gekennzeichnet, dass** sich die wenigstens eine etwa nut- und/oder rinnenförmig ausgebildete Kapillare (20) an der Innenseite (18) des Mantels (10) wenigstens teilweise oder vollständig über die gesamte Länge des Behälters (10) erstreckt.

4. Behälter nach einem der Ansprüche 1 bis 3, **dadurch gekennzeichnet, dass** die Innenseite (18) des Mantels (12) des Behälters (10) zwei oder mehrere etwa nut- und/oder rinnenförmig ausgebildete Kapillaren (20) umfasst.

5. Behälter nach einem der Ansprüche 1 bis 4, **dadurch gekennzeichnet, dass** die zwei oder mehreren etwa nut- und/oder rinnenförmig ausgebildeten Kapillaren (20) einzeln und/oder zu mehreren zueinander gleichmäßig beabstandet sind, insbesondere einzeln und/oder zu mehreren an der Innenseite (18) des Mantels (12) über den Umfang mit einer beliebigen Teilung, bevorzugt von 180°, 120°, 90°, 60°, 30°, 15°, 10° oder 5° etc., angeordnet sind.

6. Behälter nach einem der Ansprüche 1 bis 5, **dadurch gekennzeichnet, dass** die Innenseite (18) des Mantels (12) des Behälters (10) vollständig oder im Wesentlichen vollständig mit etwa nut- und/oder rinnenförmig ausgebildeten Kapillaren (20) versehen ist.

7. Behälter nach einem der Ansprüche 1 bis 6, **dadurch gekennzeichnet, dass** die wenigstens eine etwa nut- und/oder rinnenförmig ausgebildete Kapillare (20) einen Querschnitt, der keilförmig, halb- und teilkreisförmig, ellipsenförmig, elliptisch, oval, dreieckig, viereckig, quadratisch oder rechteckig, vieleckig, trapezförmig, parallelogrammförmig oder polygonförmig und/oder als Kombination daraus ausgebildet ist, aufweist.

8. Behälter nach einem der Ansprüche 1 bis 7, **dadurch gekennzeichnet, dass** dem Behälter (10) eine Einrichtung zum Gasbedrücken des Innenraumes (14) des Behälters (10) zugeordnet ist, durch welche die Flüssigkeit und/oder der viskose Stoff aus dem Behälter (10) hin zu dem Triebwerk oder der Brennkammer förderbar ist.

9. Behälter nach Anspruch 8, **dadurch gekennzeichnet, dass** der Behälter (10) mit einer der Auslassöffnung (24) des Behälters (10) abgewandt angeordneten und mit der Einrichtung zum Gasbedrücken kommunizierenden Einlassöffnung (44) versehen ist.

10. Behälter nach einem der Ansprüche 1 bis 9, **dadurch gekennzeichnet, dass** der Behälter (10) mit einer im Bereich (24) der Auslassöffnung (24) angeordneten und der Auslassöffnung (24) vorgeordneten Einrichtung (32) zum Sammeln und dosierten Abgeben der Flüssigkeiten und viskosen Stoffe, insbesondere des Kraftstoffes oder Treibstoffes oder Trinkwassers, oder dergleichen Propellant Management Device (PMD) versehen ist.

11. Behälter nach einem der Ansprüche 1 bis 10, **dadurch gekennzeichnet, dass** der Behälter (10) leichtbauend ausgebildet ist.

12. Behälter nach einem der Ansprüche 1 bis 11, **dadurch gekennzeichnet, dass** der Behälter (10), insbesondere der Mantel (12) des Behälters (10), aus Metall, insbesondere aus Stahl, Edelstahl, Aluminium, Titan, einer Legierung daraus und/oder einer Kombination daraus gebildet ist.

13. Behälter nach einem der Ansprüche 1 bis 12, **dadurch gekennzeichnet, dass** der Behälter (10), insbesondere der Mantel (12) des Behälters (10), mit einem Überzug (48) aus Kunststoff, insbesondere faserverstärktem Kunststoff, und/oder Faserverbundwerkstoff versehen ist.

14. Behälter nach einem der Ansprüche 1 bis 11, **dadurch gekennzeichnet, dass** der Behälter (10), insbesondere der Mantel (12) des Behälters (10), aus Kunststoff, insbesondere faserverstärktem Kunststoff, und/oder Faserverbundwerkstoff gebildet ist.

15. Behälter nach einem der Ansprüche 1 bis 14, **dadurch gekennzeichnet, dass** der Behälter (10), insbesondere der Mantel (12) des Behälters (10), aus thermoplastischem Faserverbundmaterial gebildet ist, welches insbesondere aus mit einem thermoplastischen Matrixmaterial aus Polyamid (PA), Polybutylenterephtalat (PBT), Polyetherketon (PEEK), Polyethersulfon (PES), Polypropylen (PP), Polyphenylensulfid (PPS) oder Polysulfon (PSU), und/oder einer Kombination daraus, ohne oder mit vorimprägnierten Fasern, vorzugsweise Aluminiumoxid-, Aluminiumnitrid-, Aramid-, Basalt-, Bornitrid-, Glas-, Graphit-, Kohlenstoff-, Nylon-, Polyethylen-, Polyester-, Siliciumcarbid-, Siliciumnitrid- und/oder Keramikfasern und/oder einer Kombination daraus, besteht.

16. Verfahren zum Herstellen eines Behälters zum Aufnehmen, Speichern und Abgeben von Flüssigkeiten und/oder viskosen Stoffen, insbesondere von Kraftstoff oder Treibstoff oder Trinkwasser, mit einem Mantel (12) und wenigstens einer mit dem Mantel (12) integral ausgebildeten, etwa nut- und/oder rinnenförmig ausgebildeten Kapillare (20), nach einem der Ansprüche 1 bis 15, umfassend folgende Schritte:
a) Bereitstellen von plattenförmigen Halbzeugen,
b) plastisches Umformen der plattenförmigen Halbzeuge zum Herstellen von einzelnen Komponenten (38, 40, 42) des Mantels (12) des Behälters (10),
c) Einbringen und/oder Aufbringen einer mikroskopischen Oberflächenstruktur (16) in/auf mindestens eine der einzelnen Komponenten (38, 40, 42) des Mantels (12) des Behälters (10) mit der wenigstens einen etwa nut- und/oder rinnenförmig ausgebildeten Kapillare (20) durch ein abtragendes oder spanendes Verfahren, insbesondere durch Mikrofräsen, und/oder durch ein prägendes Verfahren und/oder durch ein additives Verfahren, insbesondere mittels Direkten Metall-Laser-Sinterns (DMLS), Selektiven Laserschmelzens (SLM), Selektiven Lasersinterns (SLS), Additive Layer Manufacturing (ALM), Elektronenstrahlschmelzens (Electron Beam Melting (EBW), und
d) Fügen der einzelnen Komponenten (38, 40, 42) des Mantels (12) zu einem Behälter (10).

17. Verfahren zum Herstellen eines Behälters zum Aufnehmen, Speichern und Abgeben von Flüssigkeiten und/oder viskosen Stoffen, insbesondere von Kraftstoff oder Treibstoff oder Trinkwasser, mit einem Mantel (12) und wenigstens einer mit dem Mantel (12) integral ausgebildeten, etwa nut- und/oder rinnenförmig ausgebildeten Kapillare (20), nach einem der Ansprüche 1 bis 15, umfassend folgenden Schritt:
Fertigen des Mantels (12) des Behälters (10) und Einbringen und/oder Aufbringen einer mikroskopischen Oberflächenstruktur (16) in/auf den Mantel (12) des Behälters (10) mit der wenigstens einen etwa nut- und/oder rinnenförmig ausgebildeten Kapillare (20) durch ein generatives Verfahren, insbesondere mittels 3D-Druckens, Direkten Metall-Laser-Sinterns (DMLS), Selektiven Laserschmelzens (SLM), Selektiven Lasersinterns (SLS), Additive Layer Manufacturing (ALM), Elektronenstrahlschmelzens (Electron Beam Melting (EBW).

18. Verwendung eines Behälters nach einem der Ansprüche 1 bis 15 zum Aufnehmen, Speichern und Abgeben von Flüssigkeiten und viskosen Stoffen, insbesondere von Kraftstoff oder Treibstoff oder Trinkwasser, in Fahrzeugen, insbesondere in Luftfahrzeugen oder Fluggeräten der Luft- und Raumfahrt, vorzugsweise in Flugzeugen und Raumflugkörpern.

19. Verwendung eines Behälters nach einem der Ansprüche 1 bis 15 zum Aufnehmen, Speichern und Abgeben von Flüssigkeiten und/oder viskosen Stoffen, insbesondere von kryogenen Fluiden, vorzugsweise von Sauerstoff und Wasserstoff, und von gasförmigen, flüssigen und festen Medien, vorzugsweise von Treib- oder Kraftstoffen, wie Hydrazin, Monomethylhydrazin (MMH), unsymmetrischen Dimethlyhydrazin (UDMH) oder Kerosin, Oxidationsmitteln (Oxidatoren), wie Stickstofftetroxiden oder Distickstofftetroxiden (NTO), oder Treibstoff/Oxidator-Gemischen und/oder (Trink-)Wasser und Abwasser, für Tanks und Treibstofftanks von Fluggeräten der Luft- und Raumfahrt, vorzugsweise von Raketen und/oder Satelliten.

## Claims

1. Container for receiving, storing and dispensing liquids and/or viscous substances, in particular fuel or propellant or drinking water, with a casing (12) with a microscopic surface structure (16) at least partially integrally formed on the casing (12), said surface structure comprising at least one approximately groove- and/or channel-shaped capillary (20) which is arranged in an inner space (14) of the container (10) at the inner surface (18) of the casing (12) and with an end (22) facing an outlet opening (24) of the container (10), which extends towards an area (24) adjacent to or next to the outlet opening (24) of the container (10) and which is formed by two side walls (26) assigned to each other and running towards each other to convey the liquid and/or viscous substance within the capillary (20) to the outlet opening (24) of the container (10).

2. Container according to claim 1, **characterized in that** the at least one approximately groove- and/or channel-shaped capillary (20) at the inner surface (18) of the casing (12) is formed longitudinally or essentially longitudinally and arranged in a level coinciding with the length axis (28) of the container (10).

3. Container according to claim 1 or 2, **characterized in that** the at least one approximately groove- and/or channel-shaped capillary (20) at the inner surface (18) of the casing (10) extends at least partially or completely across the entire length of the container (10).

4. Container according to one of the claims 1 to 3, **characterized in that** the inner surface (18) of the casing (12) of the container (10) comprises two or more approximately groove- and/or channel-shaped capillaries (20).

5. Container according to one of the claims 1 to 4, **characterized in that** the two or more approximately groove- and/or channel-shaped capillaries (20) are placed to each other at regular distances, individually and/or in groups, in particular that they are arranged individually and/or in groups around the circumference of the inner surface (18) of the casing (12) at any pitch, preferably of 180°, 120°, 90°, 60°, 30°, 15°, 10° or 5°, etc.

6. Container according to one of the claims 1 to 5, **characterized in that** the inner surface (18) of the casing (12) of the container (10) is completely or essentially completely provided with approximately groove- and/or channel-shaped capillaries (20).

7. Container according to one of the claims 1 to 6, **characterized in that** the at least one approximately groove- and/or channel-shaped capillary (20) has a cross-section that is wedge-shaped, semi-circular and as a pitch circle, ellipsoidal, elliptic, oval, triangular, quadrangular, square or rectangular, polygonal, trapezoidal, parallelogram-shaped or polygon-shaped and/or as a combination thereof.

8. Container according to one of the claims 1 to 7, **characterized in that** means for gas pressurization of the inner space (14) of the container (10) are assigned to the container (10), by which the liquid and/or viscous substance can conveyed from the container (10) to the drive or the combustion chamber.

9. Container according to claim 8, **characterized in that** the container (10) is provided with an inlet opening (44) arranged facing away from the outlet opening (24) of the container (10) and communicating with the means for gas pressurization.

10. Container according to one of the claims 1 to 9, **characterized in that** the container (10) is provided with means (32) arranged in the area (24) of the outlet opening (24) and upstream of the outlet opening (24) for collection and dosed discharge of the liquids and viscous substances, in particular the fuel or propellant or drinking water, or a similar propellant management device (PMD).

11. Container according to one of the claims 1 to 10, **characterized in that** the container (10) is designed in a lightweight construction.

12. Container according to one of the claims 1 to 11, **characterized in that** the container (10), in particular the casing (12) of the container (10), is made of metal, in particular of steel, stainless steel, aluminum, titanium, an alloy thereof and/or a combination thereof.

13. Container according to one of the claims 1 to 12, **characterized in that** the container (10), in particular the casing (12) of the container (10), is provided with a coating (48) of plastic, in particular fiber-reinforced plastic, and/or fiber composite.

14. Container according to one of the claims 1 to 11, **characterized in that** the container (10), in particular the casing (12) of the container (10), is made of plastic, in particular of fiber-reinforced plastic, and/or fiber composite material.

15. Container according to one of the claims 1 to 14, **characterized in that** the container (10), in particular the casing (12) of the container (10), is formed of thermoplastic fiber composite material, which in particular is made of a thermoplastic matrix material of polyamide (PA), polybutylene terephthalate (PBT), polyether ketone (PEEK), polyether sulfone (PES), polypropylene (PP), polyphenylene sulphide (PPS) or polysulfone (PSU), and/or a combination thereof, without or with pre-impregnated fibers, preferably aluminum oxide, aluminum nitride, aramid, basalt, boron nitride, glass, graphite, carbon, nylon, polyethylene, polyester, silicon carbide, silicon nitride and/or ceramics fibers and/or a combination thereof.

16. Method for producing a container for receiving, storing and dispensing liquids and/or viscous substances, in particular fuel or propellant or drinking water, with a casing (12) and at least one approximately groove- and/or channel-shaped capillary (20) formed integrally with the casing (12), according to one of the claims 1 to 15, comprising the following steps:
a) providing plate-shaped semi-finished products,
b) plastic forming of the plate-shaped semi-finished products to produce individual components (38, 40, 42) of the casing (12) of the container (10),
c) introducing and/or applying of a microscopic surface structure (16) into/onto/to at least one of the individual components (38, 40, 42) of the casing (12) of the container (10) with the at least one approximately groove- and/or channel-shaped capillary (20) by using ablating or machining method, in particular by micro-milling, and/or by an embossing method and/or by an additive method, in particular by direct metal laser sintering (DMLS), selective laser melting (SLM), selective laser sintering (SLS), additive layer manufacturing (ALM), electron beam melting (EBW), and
d) joining of the individual components (38, 40, 42) of the casing (12) into a container (10).

17. Method for producing a container for receiving, storing and dispensing liquids and/or viscous substances, in particular fuel or propellant or drinking water, with a casing (12) and at least one approximately groove- and/or channel-shaped capillary (20) formed integrally with the casing (12), according to one of the claims 1 to 15, comprising the following step:
Producing the casing (12) of the container (10) and introducing and/or applying of a microscopic surface structure (16) into/onto/to the casing (12) of the container (10) with the at least one approximately groove- and/or channel-shaped capillary (20) using a generative method, in particular by way of 3D-printing, direct metal laser sintering (DMLS), selective laser melting (SLM), selective laser sintering (SLS), additive layer manufacturing (ALM), electron beam melting (EBW).

18. Use of a container according to one of the claims 1 to 15 for receiving, storing and dispensing liquids and/or viscous substances, in particular fuel or propellant or drinking water, in vehicles, particularly in aerodynes or aircraft for application in aeronautics, preferably in aeroplanes and space aerodynes.

19. Use of a container according to one of the claims 1 to 15 for receiving, storing and dispensing liquids and/or viscous substances, in particular cryogenic fluids, preferably oxygen and hydrogen, and for gaseous, liquid and solid media, preferably fuels or propellants, such as hydrazine, monomethylhydrazine (MMH), unsymmetrical dimethlyhydrazine (UDMH) or kerosine, oxidizing agents (oxidizers), such as nitrogen tetroxides or dinitrogen tetroxides (NTO), or fuel/oxidizer mixes and/or (drinking) water and waste water, for tanks and fuel tanks of aircraft for application in aeronautics, preferably of rockets and/or satellites.

## Revendications

1. Récipient pour recevoir, stocker et distribuer des liquides et/ou des substances visqueuses, en particulier du carburant ou du combustible ou de l'eau potable, comprenant une enveloppe (12) pourvue d'au moins une structure de surface microscopique (16) réalisée intégralement au moins en partie sur l'enveloppe (12), ladite structure de surface comprenant au moins un capillaire (20) réalisé en forme de gorge et/ou de rainure, qui est disposé dans un espace intérieur (14) du récipient (10) sur la face intérieure (18) de l'enveloppe (12) en étant tourné par une extrémité (22) vers une ouverture de sortie (24) du récipient (10), s'étendant jusque dans une zone (24) voisine ou adjacente de l'ouverture de sortie (24) du récipient (10) et étant formé par deux parois latérales (26) associées l'une à l'autre et s'étendant l'une vers l'autre et destinées à convoyer le liquide et/ou la substance visqueuse à l'intérieur du capillaire (20) jusqu'à l'ouverture de sortie (24) du récipient (10).

2. Récipient selon la revendication 1, **caractérisé en ce que** ledit au moins un capillaire (20) réalisé approximativement en forme de gorge et/ou de rainure sur la face intérieure (18) de l'enveloppe (12) est réalisé en forme oblongue ou sensiblement oblongue et est disposé dans un plan coïncidant avec l'axe longitudinal (28) du récipient (10).

3. Récipient selon la revendication 1 ou 2, **caractérisé en ce que** ledit au moins un capillaire (20) réalisé approximativement en forme de gorge et/ou de rainure sur la face intérieure (18) de l'enveloppe (10) s'étend au moins partiellement ou complètement sur toute la longueur du récipient (10).

4. Récipient selon l'une des revendications 1 à 3, **caractérisé en ce que** la face intérieure (18) de l'enveloppe (12) du récipient (10) comprend deux ou plusieurs capillaires (20) réalisés approximativement en forme de gorge et/ou de rainure.

5. Récipient selon l'une des revendications 1 à 4, **caractérisé en ce que** les deux ou plusieurs capillaires (20) réalisés approximativement en forme de gorge et/ou de rainure sont espacés individuellement et/ou en groupes à distance régulière les uns des autres, en particulier disposés individuellement et/ou en groupes sur la face intérieure (18) de l'enveloppe (12) sur la périphérie avec un pas quelconque, de préférence de 180°, 120°, 90°, 60°, 30°, 15°, 10° ou 5°, etc.

6. Récipient selon l'une des revendications 1 à 5, **caractérisé en ce que** la face intérieure (18) de l'enveloppe (12) du récipient (10) est pourvue complètement ou sensiblement complètement de capillaires (20) réalisés approximativement en forme de gorge et/ou de rainure.

7. Récipient selon l'une des revendications 1 à 6, **caractérisé en ce que** ledit au moins un capillaire (20) réalisé approximativement en forme de gorge et/ou de rainure présente une section transversale qui est réalisée cunéiforme, semi-circulaire et en forme de cercle partiel, ellipsoïdale, elliptique, ovale, triangulaire, quadrangulaire, carrée ou rectangulaire, polygonale, trapézoïdale, en forme de parallélogramme ou en forme de polygone et/ou sous forme de combinaison de ces formes.

8. Récipient selon l'une des revendications 1 à 7, **caractérisé en ce que** un dispositif de pressurisation en gaz de l'espace intérieur (14) du récipient (10) est associé au récipient (10) et permet de convoyer le liquide et/ou la substance visqueuse depuis le récipient (10) jusqu'au groupe moteur ou à la chambre de combustion.

9. Récipient selon la revendication 8, **caractérisé en ce que** le récipient (10) est pourvu d'une ouverture d'entrée (44) disposée en étant détournée de l'ouverture de sortie (24) du récipient (10) et communiquant avec le dispositif de pressurisation en gaz.

10. Récipient selon l'une des revendications 1 à 9, **caractérisé en ce que** le récipient (10) est pourvu d'un dispositif (32) disposé dans la zone (24) de l'ouverture de sortie (24) et en amont de l'ouverture de sortie (24) et destiné à la collecte et la distribution dosée des liquides et des substances visqueuses, en particulier du carburant ou du combustible ou de l'eau potable, ou d'un dispositif de gestion similaire pour agent propulseur, dit Propellant Management Device (PMD).

11. Récipient selon l'une des revendications 1 à 10, **caractérisé en ce que** le récipient (10) est de construction légère.

12. Récipient selon l'une des revendications 1 à 11, **caractérisé en ce que** le récipient (10), en particulier l'enveloppe (12) du récipient, est en métal, en particulier en acier, en acier inoxydable, en aluminium, en titane, en un alliage de ceux-ci et/ou en une combinaison de ceux-ci.

13. Récipient selon l'une des revendications 1 à 12, **caractérisé en ce que** le récipient (10), en particulier l'enveloppe (12) du récipient (10), est pourvu(e) d'un revêtement (48) en matière plastique, en particulier en matière plastique renforcée de fibres, et/ou en matériau composite à base de fibres.

14. Récipient selon l'une des revendications 1 à 11, **caractérisé en ce que** le récipient (10), en particulier l'enveloppe (12) du récipient (10), est réalisé(e) en matière plastique, en particulier en matière plastique renforcée de fibres, et/ou en matériau composite à base de fibres.

15. Récipient selon l'une des revendications 1 à 14, **caractérisé en ce que** le récipient (10), en particulier l'enveloppe (12) du récipient (10), est réalisé (e) en matériau composite thermoplastique à base de fibres, qui est constitué en particulier d'un matériau de matrice thermoplastique en polyamide (PA), en polybutylène téréphtalate (PBT), en polyéthercétone (PEEK), en polyéthersulfone (PES), en polypropylène (PP), en sulfure de polyphénylène (PPS) ou en polysulfone (PSU), et/ou en une combinaison de ceux-ci, sans ou avec fibres préimprégnées, de préférence des fibres d'alumine, de nitrure d'aluminium, d'aramide, de basalte, de nitrure de bore, de verre, de graphite, de carbone, de nylon, de polyéthylène, de polyester, de carbure de silicium, de nitrure de silicium et/ou de céramique, et/ou d'une combinaison de ceux-ci.

16. Procédé de réalisation d'un récipient pour recevoir, stocker et distribuer des liquides et/ou des substances visqueuses, en particulier du carburant ou du combustible ou de l'eau potable, comprenant une enveloppe (12) et au moins un capillaire (20) réalisé intégralement avec ladite enveloppe (12) et approximativement en forme de gorge et/ou de rainure, selon l'une des revendications 1 à 15, comprenant les étapes suivantes consistant à:
a) fournir des produits semi-finis en forme de plaques,
b) réaliser un formage plastique des produits semi-finis en forme de plaques pour réaliser des composants individuels (38, 40, 42) de l'enveloppe (12) du récipient (10),
c) introduire et/ou appliquer une structure de surface microscopique (16) dans/sur au moins un des composants individuels (38, 40, 42) de l'enveloppe (12) du récipient (10) avec ledit au moins un capillaire (20) approximativement en forme de gorge et/ou de rainure par un procédé d'enlèvement de matière ou d'usinage, en particulier par micro-fraisage et/ou par un procédé d'emboutissage et/ou par un procédé additif, en particulier au moyen du frittage direct de métal au laser (DMLS), de la fusion sélective au laser (SLM), du frittage sélectif au laser (SLS), de la fabrication de couches additives (Additive Layer Manufacturing) (ALM), de la fusion par faisceau d'électrons (Electron Beam Melting) (EBW), et
d) assembler les composants individuels (38, 40, 42) de l'enveloppe (12) pour donner un récipient (10).

17. Procédé de réalisation d'un récipient pour recevoir, stocker et distribuer des liquides et/ou des substances visqueuses, en particulier du carburant ou du combustible ou de l'eau potable, comprenant une enveloppe (12) et au moins un capillaire (20) réalisé intégralement avec ladite enveloppe (12) et approximativement en forme de gorge et/ou de rainure, selon l'une des revendications 1 à 15, comprenant l'étape suivante consistant à:
fabriquer l'enveloppe (12) du récipient (10) et introduire et/ou appliquer une structure de surface microscopique (16) dans/sur l'enveloppe (12) du récipient (10) avec ledit au moins un capillaire (20) approximativement en forme de gorge et/ou de rainure par un procédé génératif, en particulier au moyen de l'impression 3D, du frittage direct de métal au laser (DMLS), de la fusion sélective au laser (SLM), du frittage sélectif au laser (SLS), de la fabrication de couches additives (Additive Layer Manufacturing) (ALM), de la fusion par faisceau d'électrons (Electron Beam Melting) (EBW) .

18. Utilisation d'un récipient selon l'une des revendications 1 à 15 destiné à recevoir, à stocker et à distribuer des liquides et des substances visqueux, en particulier du carburant ou du combustible ou de l'eau potable, dans des véhicules, en particulier des avions ou des engins volants de l'aéronautique et de l'aérospatiale, de préférence dans des avions ou des aéronefs.

19. Utilisation d'un récipient selon l'une des revendications 1 à 15 destiné à recevoir, à stocker et à distribuer des liquides et/ou des substances visqueux, en particulier des fluides cryogéniques, de préférence de l'oxygène et de l'hydrogène, et des médias gazeux, liquides et solides, de préférence des agents de propulsion ou des carburants, comme hydrazine, monométhyle hydrazine (MMH), diméthyle hydrazine monosymétrique (UDMH) ou kérosène, agents d'oxydation (oxydateurs), comme tétraoxyde d'azote ou tétraoxyde diazoté (NTO), ou des mélanges carburant/oxydateur et/ou de l'eau potable ou des eaux usées, pour des réservoirs et des réservoirs de carburant des engins volants de l'aéronautique et de l'aérospatiale, de préférence des fusées et/ou des satellites.
